# EUROPEAN PATENT APPLICATION

(11) **EP 0 788 002 A1**
(43) Date of publication of application: **06.08.1997**
(21) Application number: 97100910.5
(22) Date of filing: 22.01.1997
(51) Int. Cl.: G02B 6/38

(54) **Fiber optic connector receptacle with protective shutter**

(30) Priority: 01.02.1996 JP 38935/96
(71) Applicant: MOLEX INCORPORATED, Lisle Illinois 60532 (US)
(72) Inventor: Takahashi, Tsunehiro, Yamato-shi, Kanagawa (JP)
(74) Representative: Blumbach, Kramer & Partner

(57) **Abstract**

A receptacle (1) is adapted for receiving a fiber optic connector (2) along an optic axis (37). The receptacle includes a housing (3a) having an open end (4) for receiving the fiber optic connector inserted thereinto on the optic axis. A one-piece shutter member (S) is mounted in the housing spaced inwardly of the open end. The shutter member includes a base portion (26) mounting the member in the housing and a shutter portion (25) integral with the base portion and extending across the optic axis (37) to intersect any light beams and to prevent light energy from exiting the housing along the optic axis. The shutter portion (25) is yieldable away from the optic axis upon engagement by the inserted fiber optic connector (2). The shutter portion (25) is self-biased back across the optic axis upon removal of the fiber optic connector.

## Description

### Field of the Invention

This invention generally relates to the art of fiber optic connections and, particularly, to a receptacle, such as an adapter, which has a shutter for preventing light energy from exiting the receptacle.

### Background of the Invention

Fiber optic connectors of a wide variety of designs have been employed to terminate optical fiber cables and to facilitate connection of the cables to other cables or other optical fiber transmission devices. A typical optical fiber connector includes a ferrule which mounts and centers the optical fiber within the connector. The ferrule is mounted in some form of ferrule holder which is assembled within another body member of the connector. The ferrule may be fabricated of such material as ceramic, and the ferrule holder typically is molded from plastic material. When the ferrule holder is assembled within the body member of the connector, it is biased by a spring such that the ferrule yieldably projects from the connector for engaging another fiber-mounting ferrule of a mating connecting device. A pair of connectors often are mated in an adapter which centers the fibers to provide low insertion losses. The adapter couples the connectors together so that their encapsulated fibers connect end-to-end.

Various problems are encountered when terminating optical fibers in fiber optic connectors versus terminating electrical conductors in electrical connectors, when situations arise wherein a fiber end of an "active" fiber optic connector is exposed. A typical situation might arise when one of the fiber optic connectors at one end of an adapter is removed, leaving the other "active" fiber optic connector in the adapter.

In particular, one problem concerns damage or injury which may result from light energy exiting a connector, a receptacle, an adapter or the like from the exposed end of an active optical fiber. For instance, an operator's eyes may be damaged from dangerous light beams exiting an unprotected receptacle or adapter.

Heretofore, dust covers or end caps have been used to cover exposed fiber ends to protect the fiber ends from adverse environmental hazards. However, such dust covers or end caps typically must be manually opened to allow for insertion of a fiber optic connector into the opened receptacle or adapter. Not only does this occupy one of the operator's hands which otherwise could be used for other manual manipulations, but manual opening of the cover or end cap exposes the operator's eyes to light energy exiting from the opened end.

Another approach to solving these problems has been to use a spring-loaded shutter mounted within the receptacle or adapter spaced inwardly from the open end thereof. The shutter intersects the optical axis of the receptacle or adapter and, thus, prevents light beams exiting therefrom, and the shutter is automatically opened and closed upon insertion and removal of a fiber optic connector from the receptacle or adapter. An example of one such shutter arrangement is shown in U.S. Patent No. 5,363,460 dated November 8, 1994. The shutter arrangement of this patent includes a separate shutter member pivotally mounted between outer and inner housing sleeves, and an independent spring member must be mounted in the housing operatively associated with the shutter member to afford the necessary spring biasing whereby the shutter member automatically opens and closes in response to insertion and removal of the fiber optic connector. These types of shutter arrangements have not found wide acceptance in the industry because of their complexity and the additional costs which are incurred in manufacturing receptacles, adapters or connectors having such multi-component shutter arrangements.

The present invention is directed to solving the problems discussed above by means of an extremely simple one-piece shutter member.

### Summary of the Invention

An object, therefore, of the invention is to provide a receptacle, adapter, or other device for receiving a fiber optic connector along an optic axis, including a new and improved protective shutter.

In the exemplary embodiment of the invention, the receptacle or adapter includes a housing having an open end for receiving the fiber optic connector inserted thereinto on the optic axis. A one-piece shutter member is mounted in the housing spaced inwardly of the open end. The one-piece shutter member includes a base portion mounting the member in the housing and a shutter portion integral with the base portion and extending across the optic axis to intersect any light beams and to prevent light energy from exiting the housing along the optic axis. The shutter portion is yieldably away from the optic axis upon engagement by the inserted fiber optic connector. The shutter portion is self-biased back across the optic axis upon removal of the fiber optic connector.

As disclosed herein, the one-piece shutter member is stamped and formed of sheet metal material. The base portion is formed by a base plate and the shutter portion is formed by a shutter plate extending angularly from the base plate. The shutter plate is stamped and formed out of an opening in the base plate. The base plate includes edge portions interfit with portions of the housing to mount the one-piece shutter member in the housing.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a vertical axial section through an adapter for optical fiber connectors and incorporating a shutter according to the invention;
FIGURE 2 is a horizontal axial section through the adapter;
FIGURE 3 is a top plan view of the adapter;
FIGURE 4 is a side elevational view of the adapter;
FIGURE 5 is a front end view of the adapter;
FIGURE 6 is a rear end view of the adapter;
FIGURE 7 is an enlarged top plan view of the one-piece shutter member;
FIGURE 8 is an enlarged side elevational view of the shutter member;
FIGURE 9 is an enlarged front end view of the shutter member;
FIGURE 10 is a vertical axial section through the adapter having two fiber optic connectors inserted into opposite ends of the adapter;
FIGURE 11 is a vertical axial section through the adapter, with one fiber optic connector partially inserted into one end of the adapter; and
FIGURE 12 is a view similar to that of Figure 11, but with the connector further inserted into the connector but not fully inserted as is shown in Figure 10.

### Detailed Description of the Preferred Embodiment

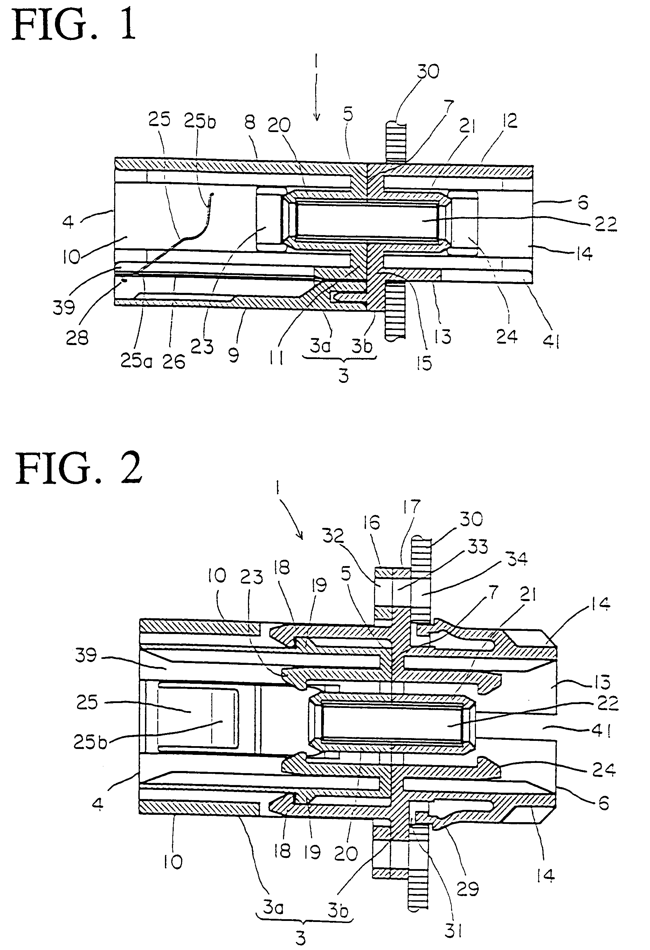

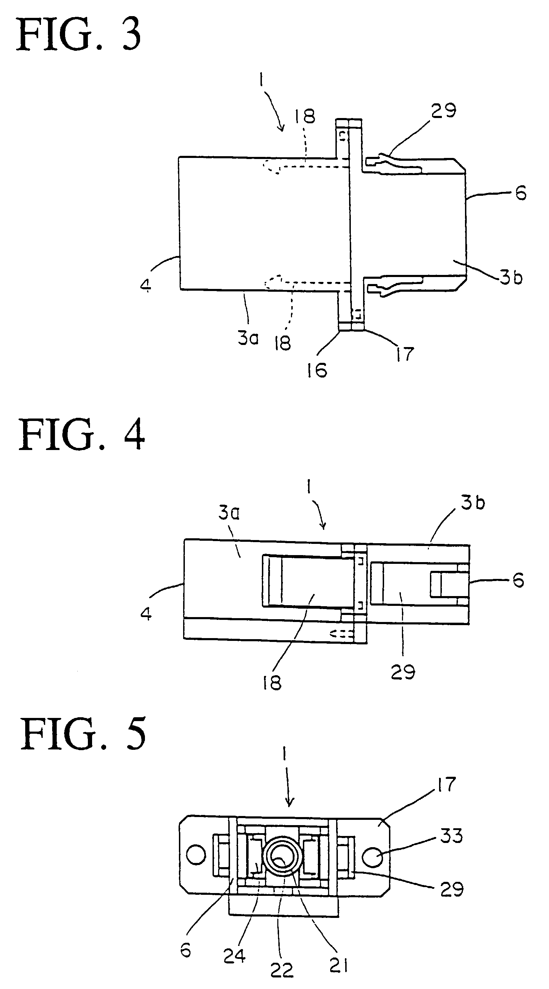

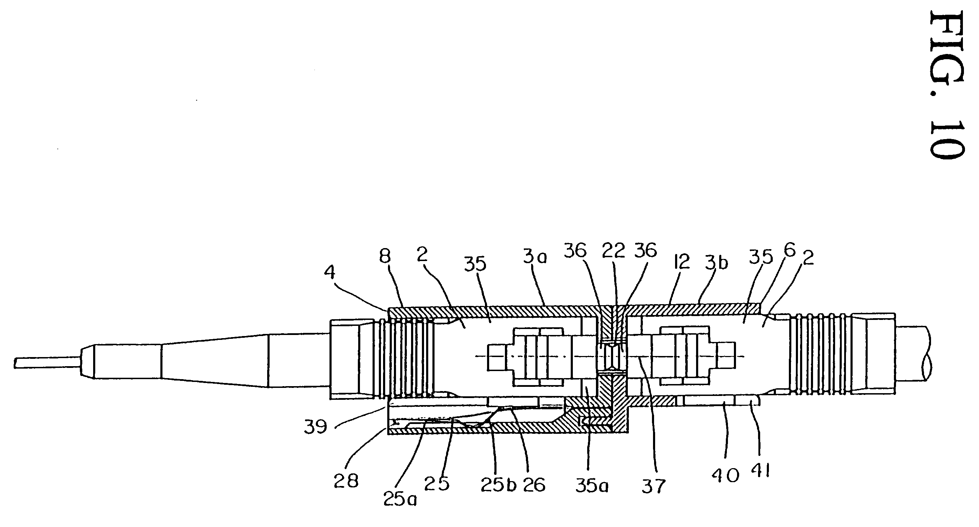

Referring to the drawings in greater detail, and first to Figures 1-5, the invention is embodied in an adapter, generally designated 1, for receiving two fiber optic connectors 2 connected end-to-end as seen in Figure 10 and described hereinafter. The adapter includes a composite housing 3 formed of two housing halves, namely a left-hand housing half 3a and a right-hand housing half 3b as viewed in the drawings. The housing halves have opposing ends 5 and 6 which abut at an interface. Housing halves 3a and 3b have open ends 4 and 6, respectively, defining receptacles for receiving the two fiber optic connectors 2. The housing halves are generally rectangular in shape to accommodate the associated rectangular fiber optic connectors 2. However, different shapes of housings/receptacles are well within the concepts of the invention.

Left-hand housing half 3a includes a top wall 8, a bottom wall 9, side walls 10 and an inner abutting wall 11 opposite its open end 4. Similarly, housing half 3b includes a top wall 12, a bottom wall 13, side walls 14 and an inner abutting wall 15 opposite its open end 6. Each side wall 10 or 14 has a flange 16 or 17 integral therewith and projecting outwardly therefrom. Each flange 17 of housing half 3b has a latch arm 18 extending toward housing half 3a for engaging a latch projection 19 on housing half 3a, thereby permitting the housing halves to be interconnected and locked together as shown most clearly in Figure 2.

Housing half 3a has an internal hollow cylinder 20 integral with abutting wall 11, and housing half 3b has an internal hollow cylinder 21 integral with its abutting wall 15. When the housing halves are interconnected, these hollow cylinders 20 and 21 are in axial, optical alignment. A cylindrical sleeve 22 is press-fit in the aligned hollow cylinders 20 and 21. Latch extensions 23 and 24 are formed between hollow cylinders 20 and 21 and the opposite side walls 10 and 14 to engage the ferrules of the optical fiber connectors 2. Each housing half 3a and 3b of composite housing 3 is a one-piece structure unitarily molded of plastic material or the like.

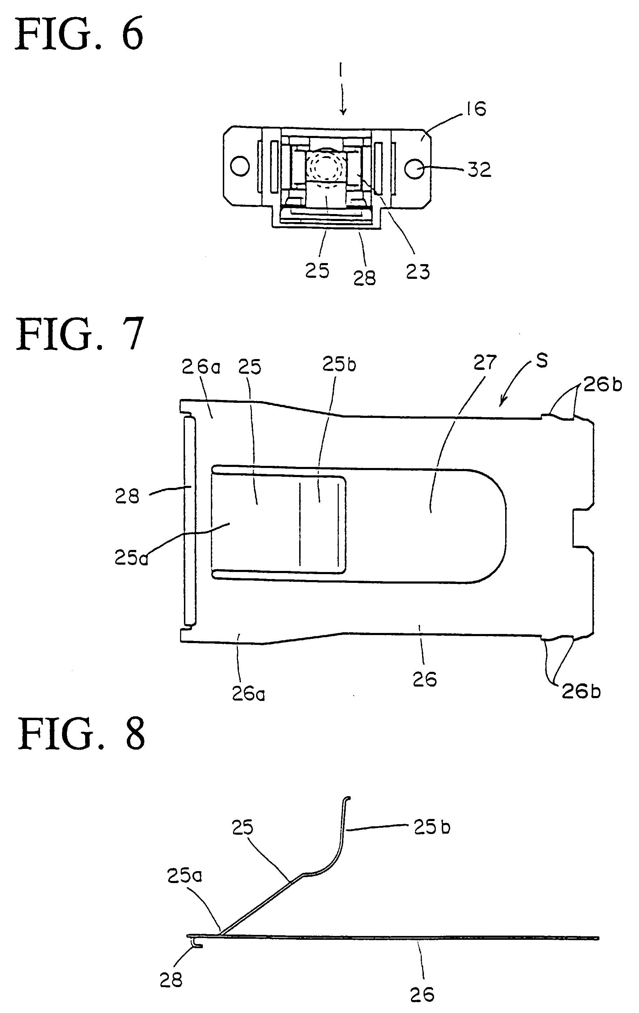

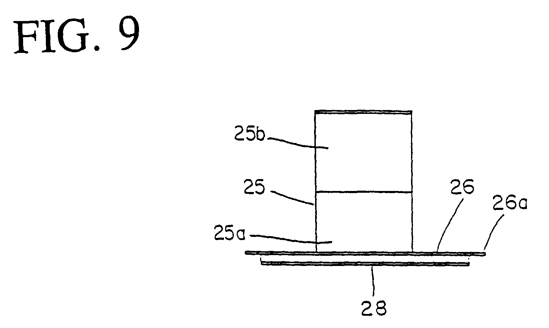

Referring to Figures 7-9 in conjunction with Figures 1-6, a one-piece shutter member "S" is stamped and formed of sheet metal material and includes a shutter portion or plate 25. The one-piece shutter member is mounted within housing half 3a of composite housing 3 as best seen in Figures 1 and 2. Shutter plate 25 is stamped and formed out of a rectangular opening 27 in a base portion or plate 26 of the one-piece shutter member. The shutter member is inserted through open end 4 of housing half 3a adjacent bottom wall 9 so that shutter plate 25 is inclined upwardly and inwardly at a predetermined acute angle relative to bottom wall 9 as seen best in Figure 1. Therefore, shutter plate 25 intersects the center, longitudinal axis passing through cylindrical sleeve 22, which corresponds to the optical axis of the adapter. As seen clearly in Figure 8, shutter plate 25 is angled upwardly relative to base plate 26 and terminates in an angled end 25b. End 25b is angled slightly relative to the optical axis to prevent light beams from being fed back along the optical axis. In other words, slightly angled end 25b deflects the light beams emitted by a fiber optic connector inserted into housing half 3b. The front, lateral edge of base plate 26 is bent downwardly to form an L-shaped reinforcing flange 28 to stiffen the front end of the base plate from which shutter plate 29 is cantilevered upwardly, as at a proximal end 25a of the shutter plate.

One-piece shutter member "S" is mounted in housing half 3a by sliding side edges 26a (Fig. 7) of base plate 26 into grooves formed beneath shelves 39 (Figs. 1 and 2) projecting inwardly from opposite side walls 10 of housing half 3a. Teeth 26b (Fig. 7) at the front edges of the shutter member bight into the plastic material at the closed inner end of housing half 3a.

Adapter 1 is designed for mounting in a panel 30. In particular, each side wall 14 of housing half 3b has a resilient panel locking arm 29 integral therewith and extending toward housing half 3a in a cantilevered fashion. Housing half 3b can be mounted to panel 30 by inserting housing half 3b through an opening 31 in the panel in a direction left-to-right as viewed in Figure 2. Locking arms 39 snap into locking engagement with the right side of the panel as flanges 17 abut against the left side of the panel. Once housing half 3b is mounted in opening 31 in panel 30, housing half 3a can be locked to housing half 3b by means of latch arms 18 and latch bosses 19. In order to fix the housing halves and the panel in this latched and locked condition, housing half 3a, housing half 3b, and panel 30 have mutually aligned holes 31, 33 and 34, respectively, for receiving appropriate fastening means such as bolts or the like.

Figure 10 shows adapter 1 having two fiber optic connectors 2 inserted into opposite ends of the adapter. The left-hand fiber optic connector is inserted into housing half 3a and is latched by latch pieces 23. A ferrule 36 of the left-hand connector is fitted into cylindrical sleeve 22. Similarly, the right-hand fiber optic connector 2 is inserted into housing half 3b and is latched by latch pieces 24. Ferrule 36 of the right-hand connector is fitted into cylindrical sleeve 22. These opposing ferrules 36 abut each other within cylindrical sleeve 22 and their optical axes are aligned with each other on optic axis 37 of adapter 1, thus completing the coupling of the mating fiber optic connectors. It can be seen in Figure 10 how the left-hand fiber optic connector fully inserted into housing half 3a has biased shutter plate 25 away from its initial position shown in Figures 1 and 2.

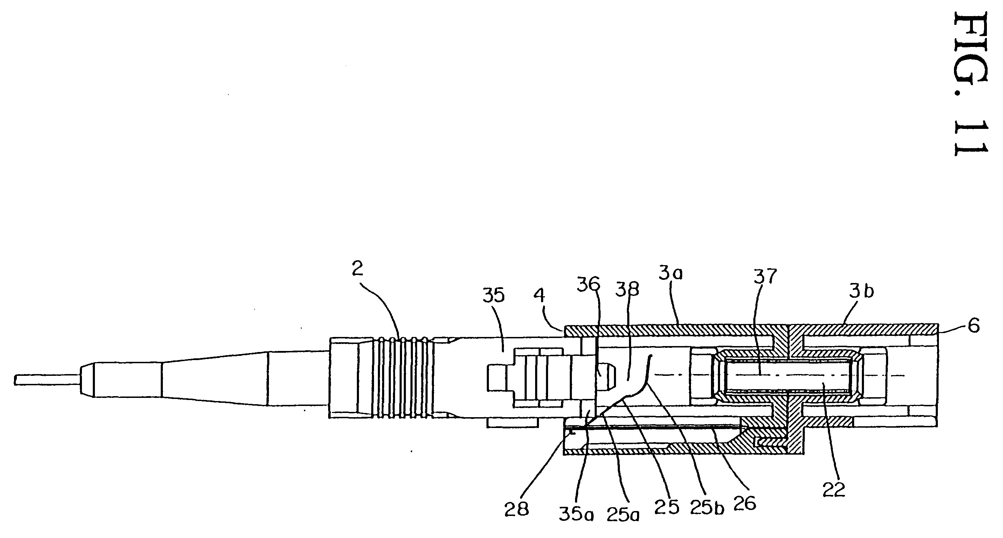

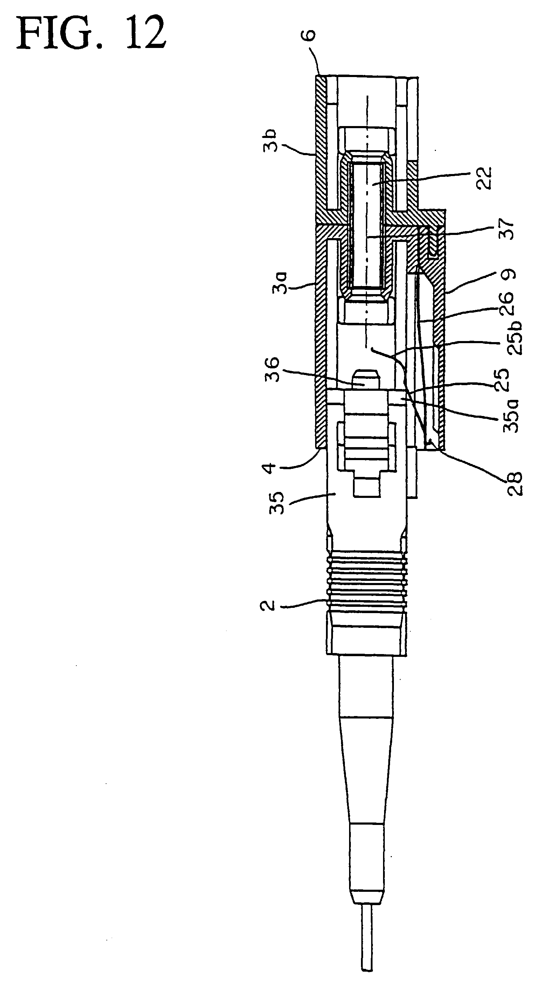

Figures 11 and 12 show how the left-hand fiber optic connector 2 is inserted into housing half 3a into engagement with shutter plate 25. In particular, as seen in Figure 11, the front end of the fiber optic connector 2 has been inserted into open end 4 of housing half 3a and has just initially engaged shutter plate 25 at its proximal end 28a. In this initially inserted position, it can be seen that the distal end 25b of the shutter plate still is intersecting the optic axis 37. Therefore, it is impossible for any light beams to exit the adapter through open end 4 to cause damage to an operator's eyes, because the connector is inserted into the housing half before it engages and moves the shutter plate. In addition, it can be seen in Figure 11 that a space 38 is maintained between the front end of ferrule 36 and the shutter plate or its distal end 25b to prevent any damage to the ferrule or the optical fiber which might project slightly therefrom.

Figure 12 shows connector 2 having been inserted further into housing half 3a to a point that the connector has engaged and moved shutter plate 25b downwardly away from optic axis 37, thereby clearing the path of light beams through the adapter. The connector will be further inserted into housing half 3a until it reaches its fully inserted position as shown in Figure 10. In this position, as described above, shutter plate 25 has been moved completely downwardly out of the path of the connector. When the connector is removed from housing half 3a of the adapter, shutter plate 25 automatically moves back to its locking position shown best in Figure 1, due to the one-piece structure of shutter member "S" and the self-biased nature of the stamped and formed metal construction of the shutter member and shutter plate 25.

When the fiber optic connector is being inserted into housing half 3a, shutter plate 25 is caused to yieldably withdraw out of the path of the optic axis while permitting base plate 26 to bend downwardly toward bottom wall 9 as seen in comparing Figures 11 and 12. This allows for a smooth lowering of shutter plate 25 which is of a relatively large size. Of course, the shutter plate and base plate return to their initial positions when the connector is removed due to the inherent resiliency of the one-piece metal shutter member.

The right-hand fiber optic connector 2 (Fig. 10) may be fitted into housing half 3b either prior to or subsequent to inserting the left-hand connector into housing half 3a. If the connector is inserted into housing half 3b prior to the mating connector being inserted into housing half 3a, shutter plate 25 blocks optic axis 37 to prevent light energy from exiting the adapter from the previously inserted connector in housing half 3b. This prevents dangerous leakage of light beams such as the light energy from laser beams. Of course, if the fiber optic connector is inserted into housing half 3a prior to inserting the connector into housing half 3b, the light beams are blocked by the previously inserted connector.

Lastly, a housing 35 of each fiber optic connector 2 includes a keying projection 40 which prevents insertion of either connector into either housing half 3a or 3b in all but one orientation. In other words, the connectors can be inserted into the adapter only when projection 40 faces downwardly. Connector half 3b has a slot 41 in its bottom wall 13 for accommodating projection 40, and connector half 3a has an open area above the shutter member for accommodating projection 40. If the connectors are attempted to be inserted into either of the connector halves in any other orientation, the top walls and the side walls of the housing halves will abut projections 40 and prevent the connectors from being inserted into the adapter except in orientations wherein the projections face downwardly.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. A receptacle (1) for receiving a fiber optic connector (2) along an optic axis (37), comprising:
a housing (3a) having an open end (4) for receiving the fiber optic connector (2) inserted thereinto on said optic axis (37); and
a one-piece shutter member (S) mounted in the housing (3a) spaced inwardly of said open end (4), including a base portion (26) mounting the one-piece shutter member in the housing and a shutter portion (25) integral with the base portion and extending across the optic axis (37) to intersect any light beams and to prevent light energy from exiting the housing along the optic axis, the shutter portion (25) being yieldable away from the optic axis upon engagement by the inserted fiber optic connector (2), and the shutter portion (25) being self-biased back across the optic axis (37) upon removal of the fiber optic connector.

2. The receptacle of claim 1 wherein said one-piece shutter member (S) is stamped and formed of sheet metal material.

3. The receptacle of claim 2 wherein said base portion of the one-piece shutter member (S) comprises a base plate (26) and the shutter portion of the one-piece shutter member comprises a shutter plate (25) extending angularly from the base plate.

4. The receptacle of claim 3 wherein said shutter plate (25) is stamped and formed out of an opening (27) in the base plate (26).

5. The receptacle of claim 4 wherein said base plate (26) includes edge portions (26a) interfit with portions (39) of the housing (3a) to mount the one-piece shutter member (S) in the housing.

6. An adapter assembly for mating an optical fiber of an associated fiber optic transmission means (2) along an optic axis (37), comprising:
an adapter (1) having a first receptacle end (4) and a second receptacle end (6), the first receptacle end (4) being adapted for receiving the associated fiber optic transmission means (2) on said optic axis (37); and
a one-piece shutter member (S) mounted in the adapter (1) spaced inwardly of said first receptacle end (4), including a base portion (26) mounting the one-piece shutter member in the adapter and a shutter portion (25) integral with the base portion and extending across the optic axis (37) to intersect any light beams and to prevent light energy from exiting the adapter along the optic axis, the shutter portion (25) being yieldable away from the optic axis upon engagement by the inserted fiber optic connector (2), and the shutter portion (25) being self-biased back across the optic axis (37) upon removal of the fiber optic connector.

7. The adapter assembly of claim 6 wherein said one-piece shutter member (S) is stamped and formed of sheet metal material.

8. The adapter assembly of claim 7 wherein said base portion of the one-piece shutter member (S) comprises a base plate (26) and the shutter portion of the one-piece shutter member comprises a shutter plate (25) extending angularly from the base plate.

9. The adapter assembly of claim 8 wherein said shutter plate (25) is stamped and formed out of an opening (27) in the base plate (26).

10. The adapter assembly of claim 9 wherein said base plate (26) includes edge portions (26a) interfit with portions (39) of the adapter (1) to mount the one-piece shutter member (S) in the adapter.
